# FASCICULE DE BREVET EUROPEEN

(11) **EP 0 839 941 B1**
(45) Date de publication et mention de la délivrance du brevet: **22.05.2002**
(21) Numéro de dépôt: 97402148.7
(22) Date de dépôt: 17.09.1997
(51) Int. Cl.: D04C 1/06, D04C 3/40

(54) **Structure tubulaire tressée pour pièce composite, sa réalisation et ses applications**
Schlauchförmige Flechtstruktur für Verbundbauteil, deren Herstellung und Anwendungen
Tubular braided structure for composite article, manufacturing it and its applications

(30) Priorité: 01.10.1996 FR 9611944
(43) Date de publication de la demande: 06.05.1998
(73) Titulaire: AEROSPATIALE MATRA, 75016 Paris (FR)
(72) Inventeur: Cahuzac, Georges Jean Joseph Antoine, 33110 Le Bouscat (FR)
(74) Mandataire: Bonnetat, Christian

(56) Documents cités:
- EP-A- 0 113 196
- EP-A- 0 243 119
- EP-A- 0 527 092
- WO-A-96/17120
- FR-A- 2 610 952
- US-A- 5 067 525

## Description

La présente invention concerne les structures tubulaires tressées, leurs procédés et machines de fabrication, ainsi que leurs applications à la réalisation d'armatures planes pour matériau composite.

Par le brevet européen EP-A-0 113 196, on connaît déjà une structure tubulaire tressée (et non pas tissée), destinée à former une pièce tubulaire composite, après imprégnation de résine et polymérisation de celle-ci. Cette structure tubulaire comporte des fils longitudinaux (parallèles à l'axe de ladite structure) et des fils hélicoïdaux de tressage formant deux réseaux de directions obliques par rapport auxdits fils longitudinaux, lesdits fils de tressage étant entrelacés les uns avec les autres, ainsi qu'avec lesdits fils longitudinaux. Ces fils longitudinaux sont répartis sur une pluralité de couronnes coaxiales à la structure et les fils hélicoïdaux de tressage suivent des trajets qui les font passer entre les fils longitudinaux d'une ou de plusieurs couronnes concentriques, ces trajets étant tels que les projections desdits fils de tressage sur un plan orthogonal à l'axe de la structure tubulaire sont des lignes brisées dont tous les tronçons sont obliques par rapport à l'épaisseur de la paroi de ladite structure tubulaire.

On peut ainsi obtenir des structures tubulaires tressées d'épaisseur de paroi notable. Cependant, malgré cela, les caractéristiques mécaniques de paroi des pièces composites tubulaires réalisées à partir de ces structures tubulaires sont relativement peu élevées, car ces structures tubulaires présentent de nombreux vides dus aux croisements des trajets des fils hélicoïdaux d'une même direction.

La présente invention a pour objet de remédier à cet inconvénient.

A cette fin, selon l'invention, la structure tubulaire tressée comportant des éléments allongés longitudinaux répartis sur une pluralité de couronnes coaxiales à la structure et des fils de tressage formant deux réseaux de directions obliques par rapport auxdits éléments allongés longitudinaux et entrelacés avec lesdits éléments allongés longitudinaux, lesdits fils de tressage suivant des trajets qui les font passer entre lesdits éléments allongés longitudinaux, est remarquable en ce que lesdits fils de tressage de chacun desdits réseaux forment un ensemble de couches superposées dans lesquelles lesdits fils de tressage sont parallèles d'une couche à l'autre.

Ainsi, lesdits fils de tressage parallèles, qui forment des couches superposées dans le sens de l'épaisseur de la paroi de ladite structure tubulaire, permettent de minimiser les croisements et donc de conférer à ladite paroi d'excellentes propriétés mécaniques.

Lesdits éléments allongés longitudinaux peuvent être des fils comme dans le brevet européen rappelé ci-dessus. Ils peuvent également être constitués de mèches de fils, de câbles, de baguettes, de tubes, etc ...

Pour pouvoir réaliser une telle structure tubulaire, il est avantageux, conformément à la présente invention, de la tresser au moyen d'une pluralité de fils de tressage se dévidant d'autant de bobines déplaçables par une succession de trajets élémentaires pour que lesdits fils de tressage s'entrelacent avec des éléments allongés parallèles les uns aux autres et répartis sur une pluralité de couronnes coaxiales. Selon l'invention, ce procédé est remarquable en ce que l'on déplace lesdites bobines à l'aide de trois sortes de trajets élémentaires, à savoir des premiers trajets élémentaires de direction orthogonale par rapport auxdites couronnes coaxiales, des deuxièmes trajets élémentaires de direction circonférentielle par rapport à ces dernières et des troisièmes trajets élémentaires, dont chacun d'eux raccorde un premier et un deuxième trajets élémentaires entre eux.

Ainsi, lesdits premiers trajets élémentaires permettent de faire passer lesdits fils de tressage autour desdits éléments allongés de couronnes différentes, c'est-à-dire dans l'épaisseur de la paroi de ladite structure tubulaire, tandis que lesdits deuxièmes trajets circonférentiels permettent de constituer lesdites couches superposées formées de fils parallèles d'une couche à l'autre.

On remarquera que, en faisant varier la succession desdits trajets élémentaires, il est possible de faire varier la "maille" de tressage. Ainsi, puisque de nombreuses successions de trajets élémentaires différents sont possibles, grâce à l'invention, on peut obtenir un grand nombre de "mailles" différentes pour la structure tubulaire de la présente invention.

Pour la mise en oeuvre d'un tel procédé, la présente invention prévoit avantageusement une machine de tressage comportant un ensemble de roues à ouches identiques, montées sur un support fixe et entraînées en rotation pour faire circuler des fuseaux porteurs de bobines de fils de tressage, lesdites roues à ouches étant disposées en lignes parallèles et équidistantes. Pour être apte à exécuter les trois sortes de trajets élémentaires caractéristiques dudit procédé, cette machine est, selon l'invention, remarquable :
- en ce que, dans ledit ensemble de roues à ouches :
   . les roues à ouches appartenant à une ligne sont espacées les unes des autres, de sorte que deux roues à ouches consécutives appartenant à une même ligne ne peuvent coopérer directement l'une avec l'autre ;
   . une roue à ouches appartenant à une ligne est disposée entre deux roues à ouches appartenant à une ligne voisine et coopère avec celles-ci ; et
- en ce que, dans les espaces entre les roues consécutives d'une ligne, sont prévus des passages pour lesdits éléments allongés longitudinaux de ladite structure tubulaire tressée.

On obtient ainsi une disposition en quinconces pour les roues à ouches et pour lesdits passages, lesdites quinconces de roues à ouches étant imbriquées avec lesdites quinconces desdits passages. Dans de telles quinconces, la distance entre les centres de deux roues à ouches consécutives d'une ligne est égale à la distance entre deux passages consécutifs d'une ligne, ces distances étant égales au double de la distance entre deux lignes voisines de roues à ouches et de passages.

Grâce à une telle disposition en quinconces, il est possible de faire circuler lesdits fuseaux transversalement et parallèlement auxdites lignes de roues à ouches, ainsi que de les faire tourner autour du centre d'une roue à ouches, de sorte que l'on peut réaliser les trois sortes de trajets élémentaires mentionnés ci-dessus.

Pour ce faire, selon une autre caractéristique de la présente invention, dans lesdits espaces entre les roues à ouches consécutives d'une ligne, sont de plus prévues des aiguilles rhomboïdales à orientation commandée destinées à aiguiller lesdits fuseaux pour les faire passer d'une roue à ouches à une autre appartenant à une ligne voisine (premiers et deuxièmes trajets élémentaires) ou pour les maintenir sur leurs roues à ouches respectives (troisièmes trajets élémentaires).

De préférence, lesdites aiguilles sont coaxiales auxdits passages pour les éléments allongés, de sorte qu'elles forment également des quinconces, superposées à celles desdits passages.

Lesdites aiguilles peuvent être commandées en orientation par une tringlerie.

De préférence, à chaque instant :
- toutes les aiguilles associées à une ligne de roues à ouches sont parallèles les unes aux autres et présentent donc une orientation commune ; et
- les orientations communes des aiguilles associées à deux lignes voisines de roues à ouches sont symétriques l'une de l'autre par rapport auxdites lignes.

Ledit support fixe des roues à ouches peut être plan. Toutefois, pour des raisons de serrage de maille de tressage, il est avantageux que ledit support plan soit cylindrique. Dans ce cas, ledit support plan peut être constitué par la paroi interne d'une couronne cylindrique. Une telle couronne peut avoir son axe disposé verticalement ou horizontalement.

Par ailleurs, par les brevets français FR-A-2 610 951 et FR-A-2 610 952, on connaît déjà une armature tissée plane pour matériau composite comportant des fils de trame répartis sur plusieurs niveaux superposés et des fils de chaîne passant autour de fils de trame se trouvant à des niveaux différents. Ainsi, une telle armature présente des caractéristiques élevées en délaminage. Cependant, du fait que les fils qui composent ladite armature ne suivent, en plan, que deux directions (celle de chaîne et celle de trame), les pièces composites qui l'incorporent peuvent, pour certaines applications, présenter un module de cisaillement insuffisant, parallèlement audit plan.

Aussi, la présente invention a également pour objet de réaliser une telle armature plane à module de cisaillement planaire amélioré.

A cette fin, selon l'invention, l'armature plane pour matériau composite comportant des éléments allongés parallèles répartis sur plusieurs niveaux superposés, à la manière de fils de trame, est remarquable :
- en ce qu'elle comporte :
   . un premier réseau de fils parallèles entre eux passant autour desdits éléments allongés se trouvant à des niveaux différents ;
   . un second réseau de fils parallèles entre eux passant autour desdits éléments allongés se trouvant à des niveaux différents ; et
- en ce que les directions générales des fils desdits premier et second réseaux sont symétriques l'une de l'autre par rapport auxdits éléments allongés parallèles.

Conformément à la présente invention, pour obtenir une telle armature plane :
- on commence par réaliser une structure tubulaire tressée comportant des éléments allongés longitudinaux parallèles répartis sur une pluralité de couronnes coaxiales à la structure et des fils de tressage formant deux réseaux de directions obliques et symétriques par rapport aux éléments allongés longitudinaux et entrelacés avec lesdits éléments allongés longitudinaux, lesdits fils de tressage suivant des trajets qui les font passer entre lesdits éléments allongés longitudinaux, de sorte que lesdits fils de tressage de chacun desdits réseaux forment un ensemble de couches superposées dans lesquelles lesdits fils de tressage sont parallèles d'une couche à l'autre ; puis
- on fend ladite structure tubulaire le long d'une ligne de coupe longitudinale parallèle auxdits éléments allongés longitudinaux.

Ainsi, après la coupe longitudinale de ladite structure tubulaire et mise à plat de celle-ci, on obtient une armature plane telle que mentionnée ci-dessus, dans laquelle, d'une part, lesdits premier et second réseaux de fils parallèles sont constitués respectivement par lesdits réseaux de fils de tressage et, d'autre part, lesdits éléments allongés parallèles répartis sur plusieurs niveaux superposés sont formés par lesdits éléments allongés longitudinaux répartis sur la pluralité de couronnes coaxiales de ladite structure tubulaire tressée.

Un tel procédé permet donc de réaliser par tressage, c'est-à-dire à grande vitesse, la structure plane conforme à l'invention. Cette dernière peut donc être fabriquée plus rapidement que les armatures tissées classiques, bien qu'elle présente de grandes améliorations par rapport à ces dernières.

On remarquera que pour obtenir une telle armature plane, il est avantageux de mettre en oeuvre la machine de tressage spécifiée ci-dessus, équipée de moyens de coupe pour fendre longitudinalement la tresse formée par ladite machine.

Les figures du dessin annexé feront bien comprendre comment l'invention peut être réalisée. Sur ces figures, des références identiques désignent des éléments semblables.

La figure 1 est une vue latérale schématique d'une partie de machine de tressage conforme à la présente invention.

La figure 2 est une vue latérale partielle agrandie, avec arrachés, de la machine de la figure 1, illustrant l'agencement des roues à ouches, des fuseaux, des aiguilles d'aiguillage et des guide-fils, conformément à la présente invention.

La figure 3 est une vue en plan partielle de l'agencement en quinconces des roues à ouches, des pieds de fuseaux, des aiguilles d'aiguillage et des guide-fils, selon la ligne III-III de la figure 2.

La figure 4 illustre schématiquement la disposition en quinconces des pignons solidaires des roues à ouches.

La figure 5 montre schématiquement la tringlerie de commande des aiguilles d'aiguillage.

Les figures 6A à 6F illustrent schématiquement le mouvement de translation rectiligne des fuseaux orthogonalement aux lignes de l'agencement des roues à ouches.

Les figures 7A et 7B illustrent schématiquement le résultat de la translation rectiligne des figures 6A à 6F.

Les figures 8A à 8F illustrent schématiquement le mouvement de translation rectiligne des fuseaux parallèlement aux lignes de l'agencement des roues à ouches.

Les figures 9A et 9B illustrent schématiquement le résultat de la translation rectiligne des figures 8A à 8F.

Les figures 10A à 10E illustrent schématiquement le mouvement de translation circulaire des fuseaux permettant de raccorder les translations rectilignes des figures 6 et 7 aux translations rectilignes des figures 8 et 9.

Les figures 11A et 11B illustrent schématiquement le résultat de la translation circulaire des figures 10A à 10E.

Les figures 12 et 13 sont respectivement une vue latérale et une vue de face schématique d'un exemple de réalisation de la machine de tressage conforme à la présente invention.

La figure 14 est une vue en élévation latérale d'une variante de réalisation schématique de la machine de tressage des figures 12 et 13.

Les figures 15, 16 et 17 montrent, respectivement, des exemples de mailles de tressage conformes à la présente invention, dans le cas particulier d'une structure à deux niveaux superposés de fils parallèles.

Les figures 18, 19 et 20 illustrent, respectivement, l'aspect superficiel de tressages obtenus par les mailles des figures 15, 16 et 17.

Les figures 21 et 22 illustrent, schématiquement, deux exemples de trajets de déplacement des fuseaux pour l'obtention de la maille des figures 15 et 18.

La figure 23 illustre, en perspective schématique, un tressage à sept niveaux de fils longitudinaux présentant la maille des figures 15 et 18.

La figure 24 illustre, en perspective schématique, un tressage présentant la maille des figures 15 et 18 et dans lequel certains fils parallèles sont remplacés par des éléments tubulaires allongés.

Les figures 25 et 26 illustrent, schématiquement, deux exemples de trajets de déplacement des fuseaux pour l'obtention de la maille des figures 16 et 19.

La figure 27 illustre, schématiquement, un exemple de trajets de déplacement des fuseaux pour l'obtention de la maille des figures 17 et 20.

La figure 28 illustre, schématiquement, encore un autre exemple de trajets de déplacement des fuseaux pour une variante de tressage à sept niveaux.

La figure 29 illustre, en perspective schématique, le tressage à sept niveaux obtenu par le déplacement des fuseaux conformément à la figure 28.

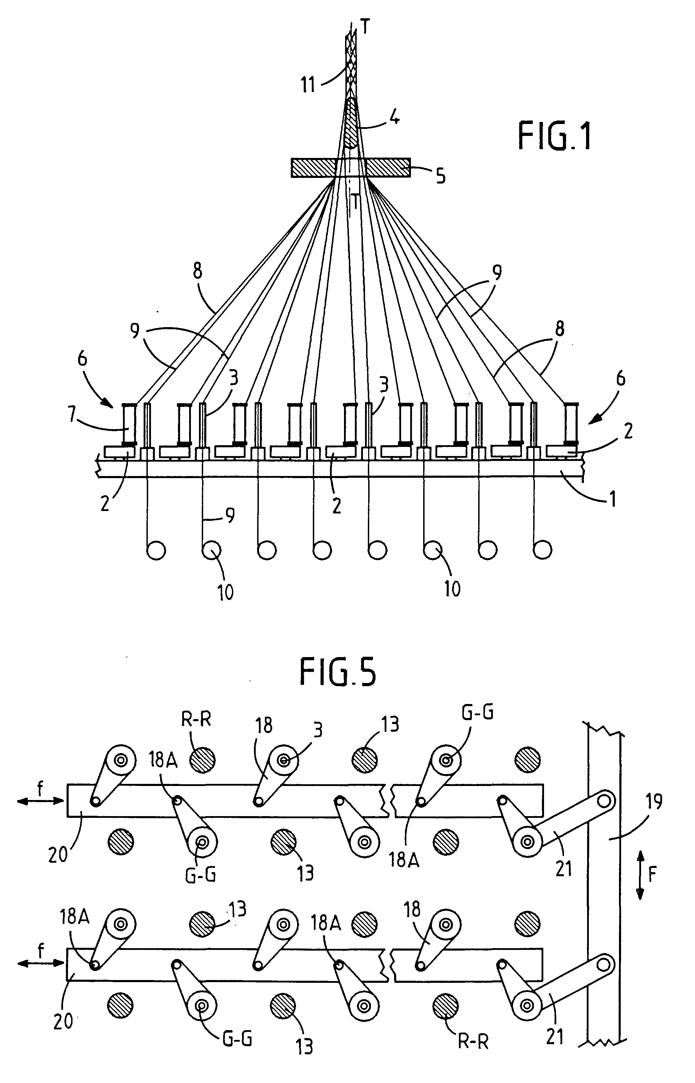

La machine de tressage représentée schématiquement et partiellement sur la figure 1 comporte un support 1 sur lequel sont tourillonnées un ensemble de roues à ouches identiques 2 et sur lequel sont montés des tubes de guidage traversants 3. Cette machine comporte de plus un mandrin de formation de tresse 4 d'axe longitudinal T-T et un anneau de formation de maille 5, coaxial audit mandrin.

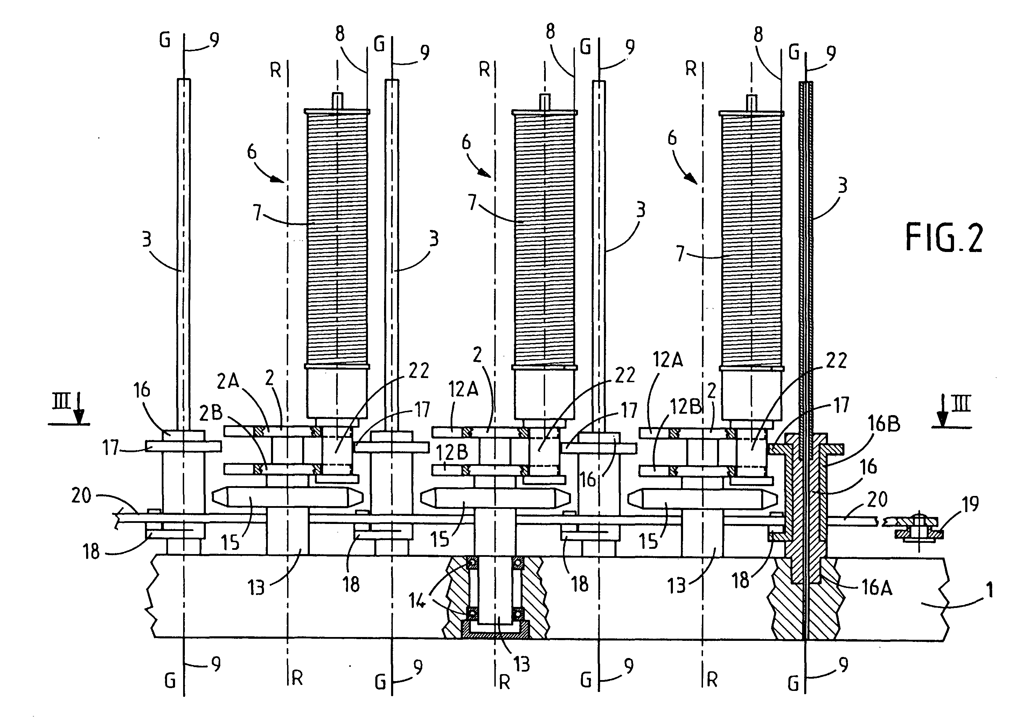

Comme cela est usuel, les roues à ouches 2, entraînées en rotation par des moyens non représentés, font circuler des fuseaux 6 porteurs de bobines 7 de fils de tressage 8. Ces fils 8 se dévident des bobines 7 et passent à travers l'anneau 5 et sont appliqués sur le mandrin 4. De tels fuseaux 6 sont très connus dans la technique du tressage et, sur les figures 1 et 2, ils ne sont représentés que très schématiquement.

Par ailleurs, des fils 9 se dévidant de bobines 10 passent à travers les tubes de guidage 3 et l'anneau 5 et sont appliqués sur ledit mandrin 4, en étant disposés parallèlement les uns aux autres et en étant répartis sur une pluralité de couronnes coaxiales à l'axe T-T.

Les roues à ouches 2, en faisant circuler les fuseaux 6 et donc les bobines 7 autour de l'axe T-T, entrelacent les fils de tressage 8 avec les fils parallèles 9, en formant, de façon connue, deux réseaux de directions obliques par rapport auxdits fils parallèles 9, lesdits fils de tressage 8 suivant des trajets qui les font passer entre lesdits fils parallèles 9.

On obtient ainsi, sur le mandrin 4, la formation progressive d'une structure tubulaire tressée ou tresse 11, d'axe T-T.

Les figures 2, 3 et 4 montrent plus en détail que :
- chaque roue à ouches 2 est double et est constituée de deux disques 2A et 2B parallèles, respectivement pourvus de quatre encoches radiales 12A ou 12B régulièrement réparties à leur périphérie, chaque encoche 12A du disque 2A étant superposée à une encoche 12B du disque 2B pour former une ouche 12 pour une roue 2. Chaque roue 2 comporte donc quatre ouches 12 réparties à 90° à sa périphérie ;
- chaque roue à ouches 2 est solidaire d'un arbre 13, d'axe R-R, tourillonné dans le support 1, grâce à des roulements 14 ; et
- sur chaque arbre 13, est calé un pignon 15.

De plus, conformément à l'invention, on peut y voir que :
- les roues à ouches 2 sont disposées en lignes parallèles et équidistantes L-L ;
- les roues à ouches 2 appartenant à une ligne L-L sont espacées les unes des autres, de sorte que les deux pignons 15 associés respectivement à deux roues à ouches consécutives appartenant à une même ligne ne peuvent être en prise l'un avec l'autre ;
- une roue à ouches 2 appartenant à une ligne L-L est disposée entre deux roues à ouches 2 appartenant à une ligne L-L voisine et les trois pignons 15 associés respectivement à ces trois roues à ouches engrènent l'un avec l'autre. On remarquera que grâce à cette particularité et à la précédente, deux roues à ouches 2 consécutives appartenant à une même ligne tournent dans le même sens ;
- les tubes de guidage 3 sont disposés dans les espaces entre les roues à ouches 2, de manière que leurs axes G-G se trouvent sur lesdites lignes L-L, à égale distance des axes R-R des roues 2 consécutives.

Ainsi, les roues à ouches 2 et les tubes de guidage 3 sont respectivement disposées en quinconces, lesdites quinconces étant imbriquées.

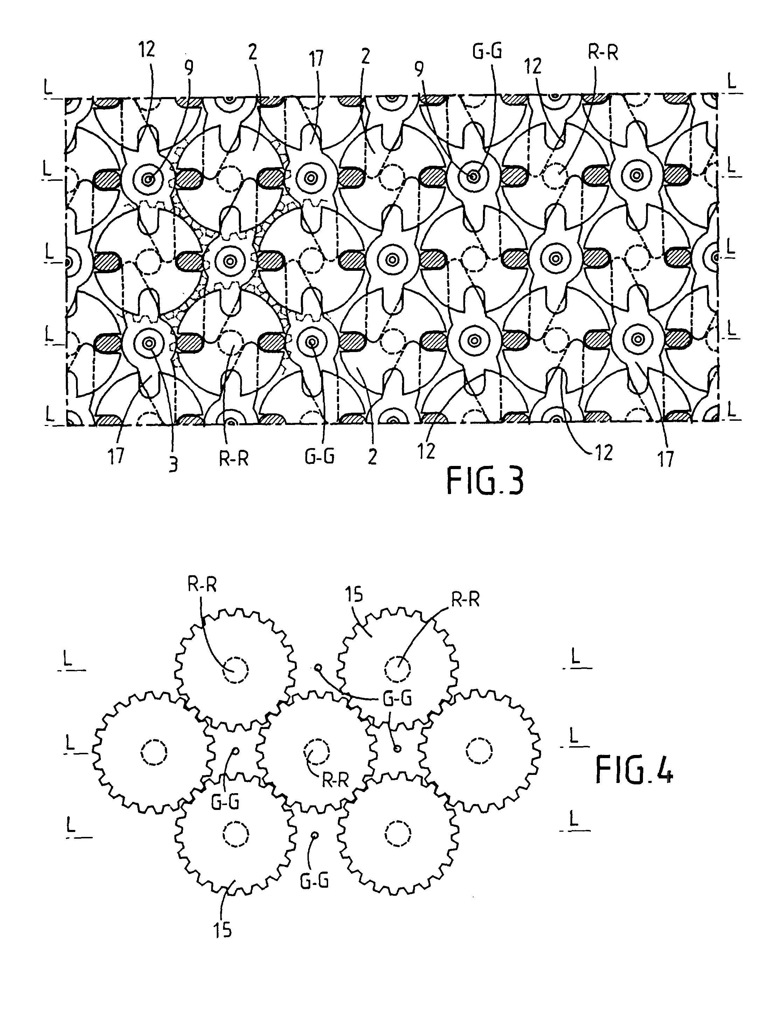

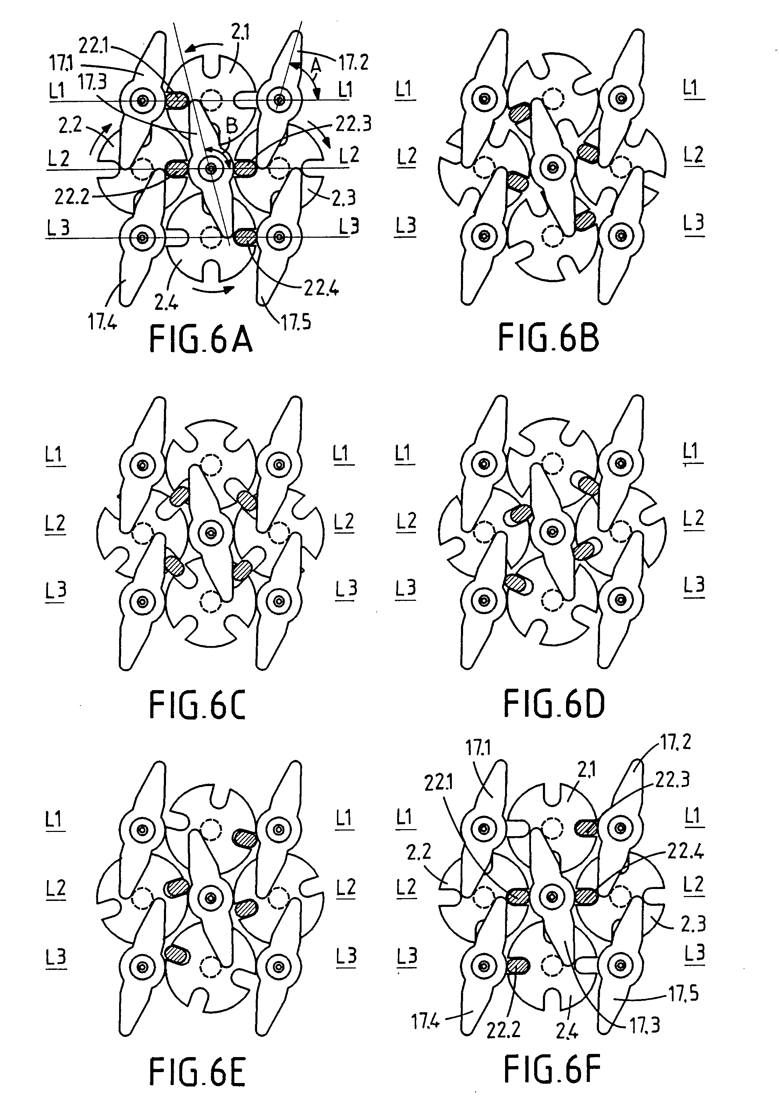

Par ailleurs, comme on peut le voir sur la figure 2, chaque tube de guidage 3 est monté sur le support 1 par l'intermédiaire d'un pied 16, fixé dans ledit support par un tenon 16A. Sur chaque pied 16 est montée rotative, autour de l'axe G-G correspondant, une chemise 16B qui porte, à sa partie supérieure, un doigt d'aiguillage 17 en forme d'aiguille rhomboïdale (voir également la figure 3) et, à sa partie inférieure, une patte de commande 18 (voir également la figure 5).

Pour la commande en orientation desdites aiguilles 17, la machine comporte une tringlerie comportant une barre coulissante commune 19 et une pluralité de barres coulissantes 20, parallèles entre elles, mais orthogonales à la barre commune 19. Chacune des barres 20 est articulée, à une de ses extrémités, à la barre commune 19 par l'intermédiaire d'une biellette 21, de sorte que lesdites barres 20 sont entraînées en translation parallèlement à leur axe longitudinal (flèches f) lorsque ladite barre commune 19 est déplacée parallèlement à son axe longitudinal (flèche F).

Chaque barre 20 est prévue pour la commande des aiguilles 17 de deux lignes L-L consécutives, de sorte que les pattes de commande 18, associées à ces deux lignes d'aiguilles, sont articulées par leur extrémité libre, en 18A, sur ladite barre 20.

De plus, la disposition desdites pattes de commande 18 sur les barres 20 est telle que :
- toutes les aiguilles 17 d'une ligne sont parallèles entre elles et restent parallèles entre elles, lorsqu'elles tournent autour de leurs axes respectifs G-G, sous l'action de la barre coulissante 20 correspondante, elle-même entraînée en coulissement par la barre commune 19 ;
- les aiguilles 17 appartenant à deux lignes L-L voisines sont symétriques les unes des autres par rapport aux lignes et tournent en restant symétriques, lorsque la lame commune 19 coulisse.

Ainsi, l'orientation commune des aiguilles 17 d'une ligne L-L est symétrique de l'orientation commune des aiguilles 17 d'une ligne L-L voisine, et toutes les aiguilles 17 d'une ligne L-L sur deux sont parallèles entre elles.

L'amplitude totale de rotation de chaque aiguille 17, sous l'action du coulissement de la lame commune 19, peut être de l'ordre de 60°.

De façon usuelle, chaque fuseau 6 est pourvu d'un pied 22 susceptible d'être saisi par une ouche 12 d'une roue 2 pour permettre le déplacement desdits fuseaux par rapport audit ensemble des roues à ouches, sous le contrôle des aiguilles 17, comme cela est décrit ci-après en regard des figures 6 à 11.

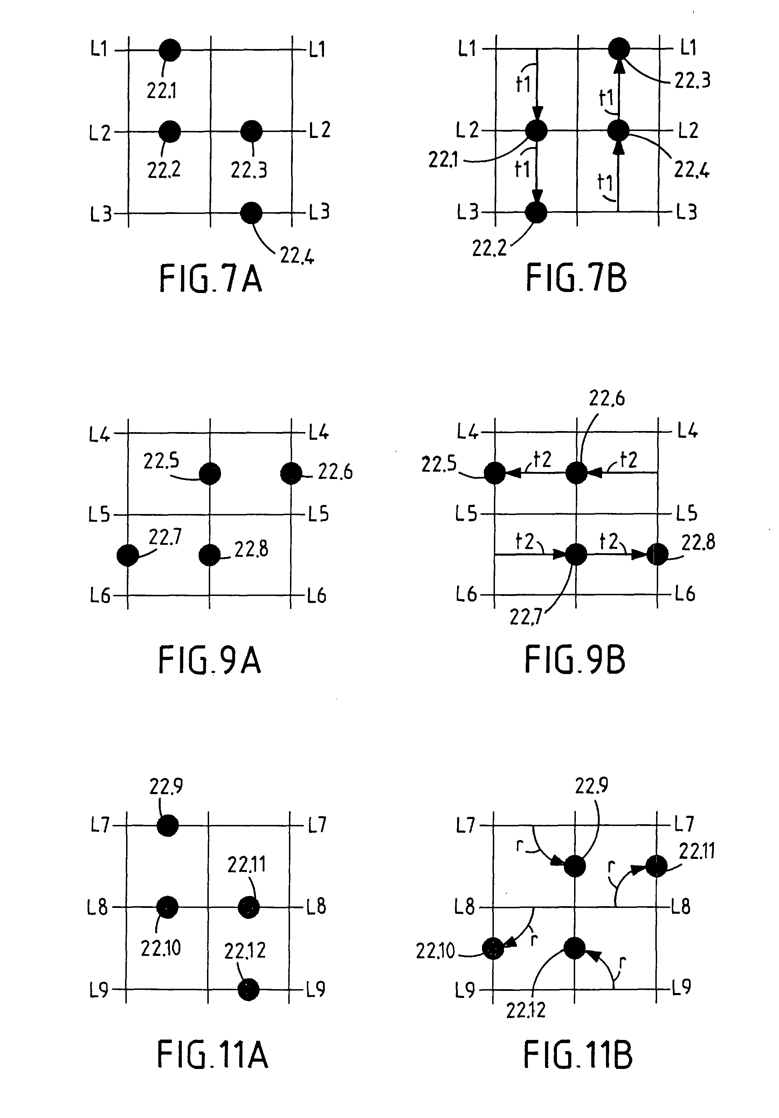

Les figures 6A à 6F et 7A, 7B illustrent un premier trajet élémentaire pour le déplacement des fuseaux 6. Sur les figures 6A à 6F, on a représenté un groupe de quatre roues à ouches 2.1 à 2.4 et cinq aiguilles 17.1 à 17.5 disposées de façon que :
- la roue à ouches 2.1 et les aiguilles 17.1 et 17.2 sont disposées sur une ligne L1-L1, lesdites aiguilles étant voisines de ladite roue et placées de part et d'autre de celle-ci ;
- les roues à ouches 2.2 et 2.3 et l'aiguille 17.3 sont disposées sur une ligne L2-L2 voisine de la ligne L1-L1, lesdites roues étant voisines de ladite aiguille et placées de part et d'autre de celle-ci ;
- la roue à ouches 2.4 et les aiguilles 17.4 et 17.5 sont disposées sur une ligne L3-L3 voisine de la ligne L2-L2, lesdites aiguilles étant voisines de ladite roue et placées de part et d'autre de celle-ci ; et
- les pignons 15 (non représentés) des roues à ouches 2.1 à 2.4 coopèrent les uns avec les autres, comme cela est illustré sur la figure 4.

De plus, sur la figure 6A, qui illustre un état initial, on a supposé que :
- les aiguilles 17.1, 17.2, 17.4 et 17.5 présentent une orientation, réglée par la tringlerie 19, 20, telle qu'elles font un angle A voisin de 75° par rapport à leur ligne respective L1-L1 ou L3-L3 ;
- l'aiguille 17.3 présente une orientation, réglée par la tringlerie 19, 20, telle qu'elle fait un angle B voisin de 105° par rapport à la ligne L2-L2 ;
- chacune des roues 2.1 à 2.4 présente deux ouches alignées sur la ligne L1-L1, L2-L2 ou L3-L3, respectivement ;
- des pieds de fuseaux 22.1, 22.2, 22.3 et 22.4 se trouvent respectivement sur les lignes L1-L1, L2-L2 et L3-L3, le pied 22.1 (en prise avec la roue 2.1) étant en regard de l'aiguille 17.1, tandis que les pieds 22.2 et 22.3 (en prise respectivement avec les roues 2.2 et 2.3) se trouvent du côté de l'aiguille 17.3 et que le pied 22.4 (en prise avec la roue 2.4) est en regard de l'aiguille 17.5 ; et
- la roue 2.1 tourne dans le sens inverse des aiguilles d'une montre, de sorte qu'il en est de même de la roue 2.4 et que les deux roues 2.2 et 2.3 tournent dans le sens des aiguilles d'une montre.

De plus, sur les figures 6A à 6F, on suppose que les aiguilles 17.1 à 17.5 gardent une orientation fixe, telle que décrite ci-dessus.

Dans ces conditions, dès que les roues 2.1 à 2.4 tournent, elles amènent les pieds 22.1 et 22.4 au contact de l'aiguille 17.3 et les pieds 22.2 et 22.3, respectivement au contact des aiguilles 17.4 et 17.2 (voir la figure 6B). La rotation desdites roues se poursuivant, des ouches de roues différentes viennent en regard desdits pieds 22.1 à 22.4 et les aiguilles 17.2, 17.3 et 17.4 poussent lesdits pieds 22.1 à 22.4 pour les faire pénétrer dans l'ouche d'une autre roue et, donc, pour les faire changer de roue.

En examinant les étapes successives illustrées par les figures 6C, 6D, 6E et 6F, on peut constater que :
- le pied 22.1 passe de la roue 2.1 à la roue 2.2,
- le pied 22.2 passe de la roue 2.2 à la roue 2.4,
- le pied 22.3 passe de la roue 2.3 à la roue 2.1,
- le pied 22.4 passe de la roue 2.4 à la roue 2.3.

Lorsque toutes les roues ont tourné d'un quart de tour (figure 6F), tous les pieds 22.1 à 22.4 ont effectué un trajet élémentaire de translation t1, orthogonal auxdites lignes L1-L1, L2-L2 et L3-L3 et d'amplitude égale à la distance entre lesdites lignes, comme cela est clairement illustré sur les figures 7A et 7B, qui illustrent respectivement les positions initiales (figure 7A) et les positions finales (figure 7B) correspondant respectivement aux figures 6A et 6F.

Par ce trajet élémentaire t1, les pieds 22.1 et 22.2 se sont éloignés de la ligne L1-L1 en direction de la ligne L3-L3, tandis que les pieds 22.3 et 22.4 se sont éloignés de la ligne L3-L3 en direction de la ligne L1-L1.

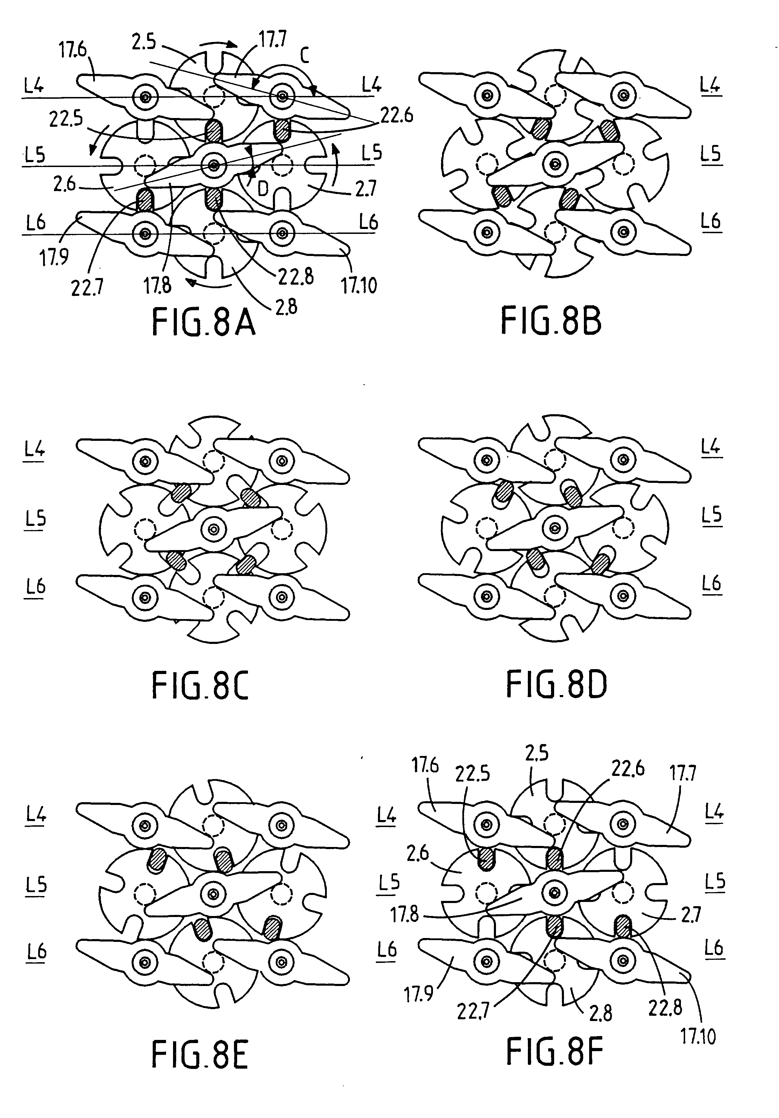

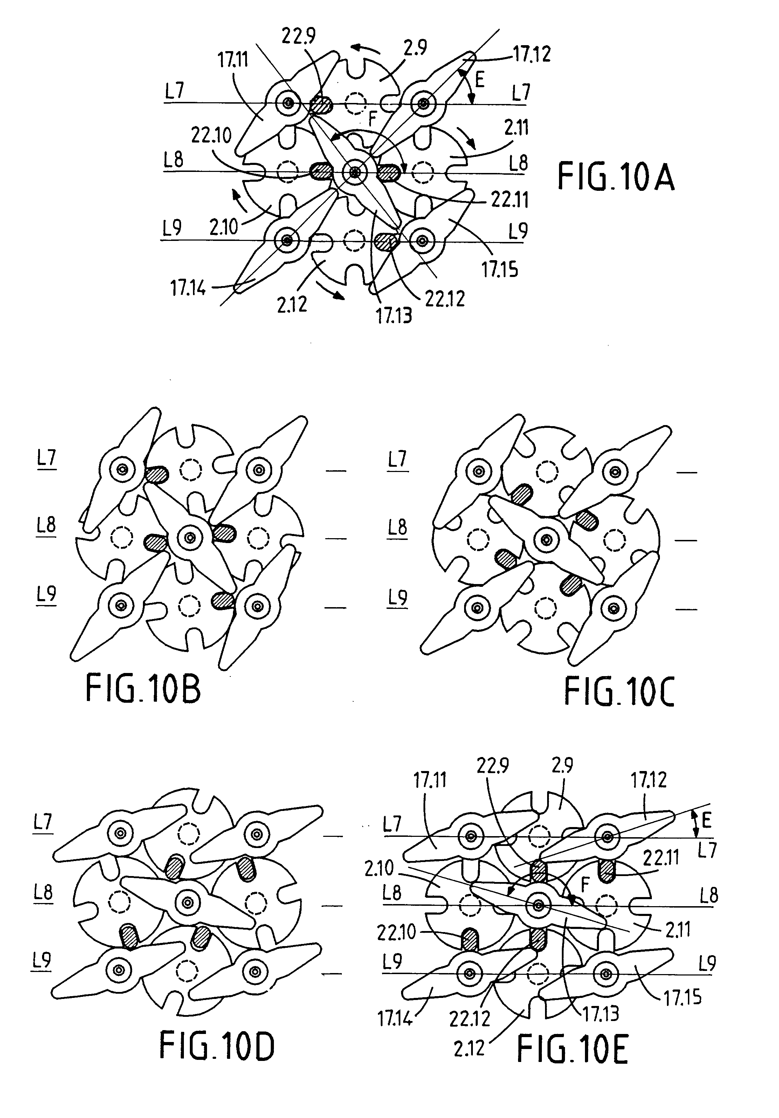

Les figures 8A à 8F et 9A, 9B illustrent un deuxième trajet élémentaire pour le déplacement des fuseaux 6. Sur les figures 8A à 8F, on a représenté un groupe de quatre roues à ouches 2.5 à 2.8 et cinq aiguilles 17.6 à 17.10, respectivement disposées sur des lignes L4-L4, L5-L5 et L6-L6, de manière semblable à la disposition des roues à ouches 2.1 à 2.4 et des aiguilles 17.1 à 17.5 sur les lignes L1-L1, L2-L2 et L3-L3, comme représenté sur les figures 6A à 6F.

Sur la figure 8A, qui illustre un état initial :
- les aiguilles 17.6, 17.7, 17.9 et 17.10 ont une orientation, imposée par la tringlerie 19, 20, telle qu'elles font un angle C voisin de 165° par rapport à leur ligne respective L4-L4 ou L6-L6 ;
- l'aiguille 17.8 a une orientation, telle qu'elle fait un angle D voisin de 15° par rapport à la ligne L5-L5 ;
- chacune des roues 2.5 à 2.8 présente deux ouches alignées perpendiculairement auxdites lignes L4-L4, L5-L5 ou L6-L6 ;
- des pieds de fuseaux 22.5 à 22.8 se trouvent respectivement dans de telles ouches, de façon que :
   . le pied 22.5, en prise avec la roue 2.5, se trouve entre les aiguilles 17.6 et 17.8 ;
   . le pied 22.6, en prise avec la roue 2.7, se trouve entre les aiguilles 17.7 et 17.8 ;
   . le pied 22.7, en prise avec la roue 2.6, se trouve entre les aiguilles 17.8 et 17.9 ;
   . le pied 22.8, en prise avec la roue 2.8, se trouve entre les aiguilles 17.8 et 17.10.

De plus, sur les figures 8A à 8F, les aiguilles 17.6 à 17.10 gardent une orientation fixe, correspondant respectivement aux angles C ou D, et la roue 2.5 tourne dans le sens des aiguilles d'une montre, de sorte qu'il en est de même de la roue 2.8, et que les roues 2.6 et 2.7 tournent dans le sens inverse des aiguilles d'une montre.

Dans ces conditions, dès que les roues 2.5 à 2.8 tournent, elles amènent le pied 22.5 en appui contre l'aiguille 17.6, le pied 22.8 en appui contre l'aiguille 17.10 et les pieds 22.6 et 22.7 en appui contre l'aiguille 17.8 (voir la figure 8B). La rotation des roues à ouches se poursuivant, des ouches de roues différentes viennent en regard desdits pieds 22.5 à 22.8 et les aiguilles 17.6, 17.8 et 17.10 poussent lesdits pieds 22.5 à 22.8 pour les faire pénétrer dans l'ouche d'une autre roue et, donc, pour les faire changer de roue.

En examinant les étapes successives illustrées par les figures 8C à 8F, on peut constater que :
- le pied 22.5 passe de la roue 2.5 à la roue 2.6,
- le pied 22.6 passe de la roue 2.7 à la roue 2.5,
- le pied 22.7 passe de la roue 2.6 à la roue 2.8,
- le pied 22.8 passe de la roue 2.8 à la roue 2.7.

Ainsi, lorsque toutes les roues 2.5 à 2.8 ont tourné d'un quart de tour (figure 8F), tous les pieds 22.5 à 22.8 ont effectué un trajet élémentaire de translation t2, parallèle auxdites lignes L4-L4, L5-L5 et L6-L6 et d'amplitude égale à la distance entre lesdites lignes, comme cela est clairement illustré sur les figures 9A et 9B, qui montrent respectivement les positions initiales (figure 9A) et les positions finales (figure 9B), correspondant respectivement aux figures 8A et 8F.

Par ce trajet élémentaire t2, les pieds 22.5 et 22.6 se sont déplacés vers la gauche des figures, tandis que les pieds 22.7 et 22.8 se sont déplacés vers la droite de celles-ci.

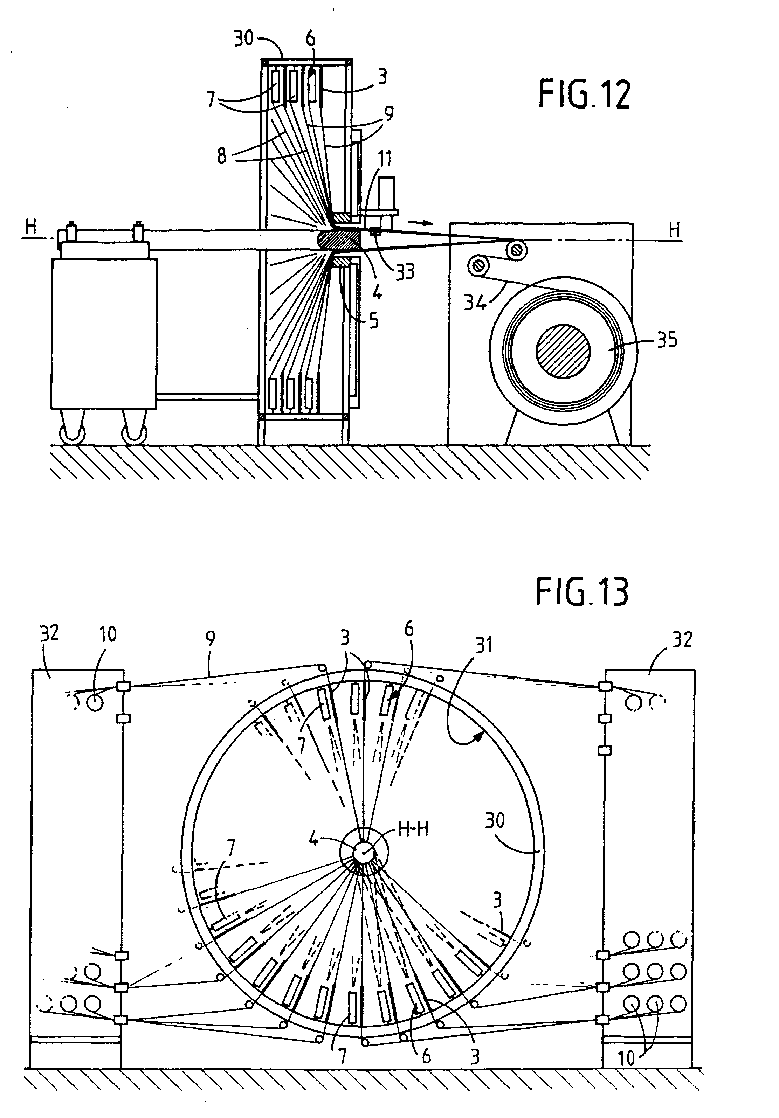

Les figures 10A à 10E et 11A, 11B illustrent un troisième trajet élémentaire pour le déplacement des fuseaux 6. Sur les figures 10A à 10E, on a représenté un groupe de quatre roues à ouches 2.9 à 2.12 et cinq aiguilles 17.11 à 17.15, respectivement disposées sur des lignes L7-L7, L8-L8 et L9-L9, de manière semblable à la disposition des roues à ouches 2.1 à 2.4 et des aiguilles 17.1 à 17.5 sur les lignes L1-L1, L2-L2 et L3-L3, comme représenté sur les figures 6A à 6F.

Sur la figure 10A, qui illustre un état initial :
- les aiguilles 17.11, 17.12, 17.14 et 17.15 ont une orientation, imposée par la tringlerie 19, 20, telle qu'elles font un angle E voisin de 45° par rapport à leur ligne respective L7-L7 ou L9-L9 ;
- l'aiguille 17.13 a une orientation, telle qu'elle fait un angle F voisin de 135° par rapport à la ligne L8-L8 ;
- chacune des roues 2.9 à 2.12 présente deux ouches alignées avec les lignes L7-L7, L8-L8 ou L9-L9 ;
- des pieds de fuseaux 22.9 à 22.12 se trouventrespectivement dans de telles ouches, de façon que :
   . le pied 22.9, en prise avec la roue 2.9, se trouve entre les aiguilles 17.11 et 17.13 ;
   . le pied 22.10, en prise avec la roue 2.10, se trouve entre les aiguilles 17.13 et 17.14 ;
   . le pied 22.11, en prise avec la roue 2.11, se trouve entre les aiguilles 17.12 et 17.13 ;
   . le pied 22.12, en prise avec la roue 2.12, se trouve entre les aiguilles 17.13 et 17.15.

Sur les figures 10A à 10F, la roue 2.9 tourne dans le sens inverse des aiguilles d'une montre, de sorte qu'il en est de même de la roue 2.12 et que les roues 2.10 et 2.11 tournent dans le sens des aiguilles d'une montre. De plus, dans l'exécution dudit troisième trajet élémentaire, les aiguilles sont commandées en orientation par la tringlerie 19, 20, de sorte que les angles E et F passent respectivement de valeurs initiales approximativement égales à 45° et 135° (figure 10A) à des valeurs finales approximativement égales à 15° et 165° (figure 10E).

Dans ces conditions, dès que les roues 2.9 et 2.12 et les aiguilles 17.11 à 17.15 se mettent à tourner, les pieds 22.9 et 22.12 sont appuyés contre l'aiguille 17.13, tandis que les pieds 22.10 et 22.11 viennent respectivement en appui contre les aiguilles 17.14 et 17.12. Chacun desdits pieds 22.9 à 22.12 est alors obligé de rester dans l'ouche dans laquelle il était logé initialement, sans possibilité de changer de roue.

Ainsi, lorsque toutes les roues 2.9 à 2.12 ont tourné d'un quart de tour (figure 10E), tous les pieds 22.9 à 22.12 ont également tourné d'un quart de tour, autour de l'axe de leurs roues respectives, de sorte que chacun d'eux a effectué un trajet élémentaire de rotation r d'un quart de tour, soit dans le sens des aiguilles d'une montre (22.9 et 22.10), soit dans le sens inverse (22.11 et 22.12), comme cela est clairement illustré sur les figures 11A et 11B, qui montrent respectivement les positions initiales (figure 11A) et les positions finales (figure 11B), correspondant respectivement aux figures 10A et 10E.

De ce qui précède, on comprendra aisément :
a) qu'un premier trajet élémentaire t1 présente une direction parallèle à l'épaisseur de la paroi de la tresse 11, c'est-à-dire orthogonale aux couronnes coaxiales de fils 9, de sorte qu'un fil 8, se dévidant d'une bobine 7 déplacée selon un tel trajet élémentaire t1, présente un tronçon qui, en projection orthogonale à l'axe T-T, est également orthogonal auxdites couronnes coaxiales ;
b) que plusieurs trajets élémentaires t1 peuvent être enchaînés successivement, pour faire varier la longueur dudit tronçon dudit fil 8 orthogonal auxdites couronnes ;
c) qu'un deuxième trajet élémentaire t2 présente une direction circonférentielle par rapport à ladite tresse 11 et auxdites couronnes coaxiales de fils 9, de sorte qu'un fil 8, se dévidant d'une bobine 7 déplacée selon un tel trajet élémentaire t2, présente un tronçon qui, en projection orthogonale à l'axe T-T, est également circonférentiel à ladite tresse ;
d) que plusieurs trajets élémentaires t2 peuvent être enchaînés successivement, pour faire varier la longueur dudit tronçon de fil 8 circonférentiel ; et
e) qu'un troisième trajet élémentaire r permet de raccorder un premier trajet t1 à un deuxième trajet t2 et vice-versa, de sorte que l'on peut faire suivre à un fil 8 un trajet continu composé de tronçons correspondant aux trajets élémentaires t1 et aux trajets élémentaires t2, raccordés entre eux.

Ainsi, lesdits premiers trajets élémentaires t1 sont utilisés pour déplacer les fils de tressage 8 entre les fils parallèles 9 des couronnes coaxiales, tandis que lesdits deuxièmes trajets élémentaires t2 sont utilisés pour former le tressage proprement dit avec lesdits fils 8. On remarquera que ceux-ci étant tous circonférentiels par rapport à la tresse (et non pas obliques par rapport à l'épaisseur de la paroi de la tresse, comme dans le brevet européen EP-A-0 113 196), lesdits fils de tressage 8 de chacun des deux réseaux de la tresse 11 forment un ensemble de couches superposées dans lesquelles lesdits fils de tressage 8 sont parallèles d'une couche à l'autre.

Dans la machine décrite schématiquement en regard des figures 1 à 5, on a supposé implicitement que le support 1 des roues à ouches 2 est plan. En revanche, sur les figures 12 et 13, on a représenté schématiquement une machine conforme à la présente invention, dans laquelle ledit support est formé par une couronne cylindrique fixe 30, d'axe horizontal H-H.

Dans le mode de réalisation des figures 12 et 13, les tubes de guidage traversants 3 et les fuseaux 6, porteurs des bobines 7, sont montés sur la paroi interne 31 de la couronne 30 (à des fins de clarté, les roues à ouches 2 ne sont pas représentées). Bien entendu, dans ce cas, il est nécessaire dans la réalisation et le montage des roues à ouches 2, des pignons 15 et des tubes 3 de tenir compte de la concavité circulaire de la paroi interne 31.

Le mandrin 4 est disposé coaxialement à la couronne 30 et les bobines 10 des fils 9 sont montées dans des cantres 32 disposés latéralement (non représentés sur la figure 12).

La machine des figures 12 et 13 comporte de plus, en aval du mandrin 4, un dispositif de coupe 33 pour fendre la tresse 11 longitudinalement, c'est-à-dire parallèlement aux fils 9 de ladite tresse. On obtient ainsi une bande plane 34, qui peut s'enrouler sur un tambour 35. Une telle bande plane 34 constitue donc une armature plane comportant des fils parallèles 9 répartis sur plusieurs niveaux superposés (chaque niveau correspondant à une couronne coaxiale de fils 9 de la tresse 11), ainsi que deux réseaux de fils 8 passant autour desdits fils parallèles 9, tels que, dans chacun desdits réseaux de fils 8, ceux-ci sont parallèles les uns aux autres et que les directions générales des fils 8 de ces deux réseaux de fils sont symétriques l'une de l'autre par rapport aux fils parallèles 9.

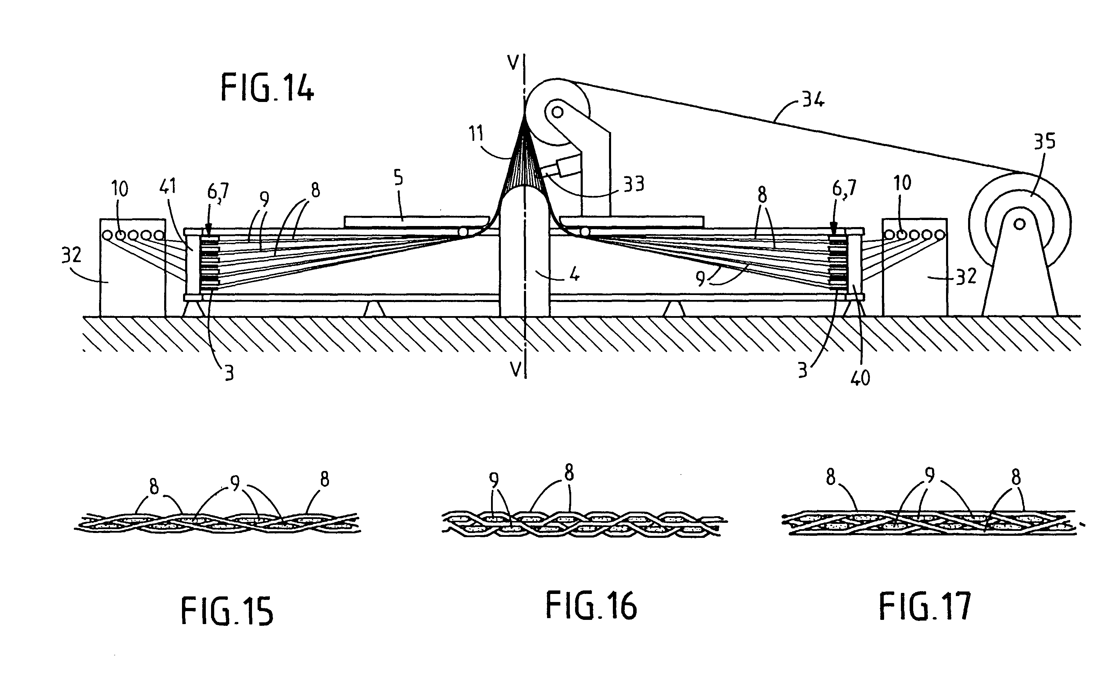

La figure 14 illustre une variante de la machine des figures 12 et 13, dans laquelle les tubes de guidage traversants 3 et les fuseaux 6 sont montés sur la paroi interne 41 d'une couronne 40, d'axe vertical V-V. Le mandrin 4 est alors disposé verticalement, coaxialement à la couronne 40. Sur cette figure 14, on retrouve les cantres 32 et le dispositif de coupe 33. Ce dernier permet d'obtenir, à partir de la tresse 11, la bande plane 34, qui s'enroule sur le tambour 35.

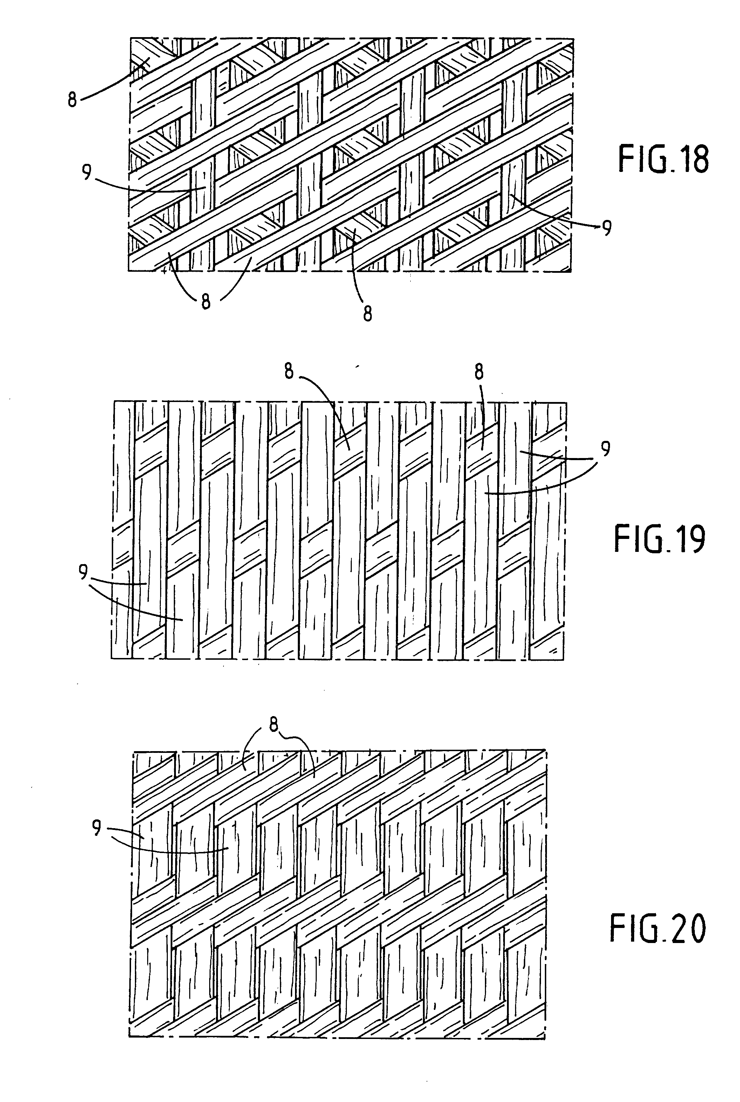

Les figures 15, 16 et 17 illustrent respectivement trois exemples de maille pour la tresse 11 ou l'armature 34, dans le cas simplifié où il n'existe que deux couronnes coaxiales (ou deux niveaux superposés) de fils parallèles 9. Sur ces figures, qui correspondent sensiblement à des sections orthogonales auxdits fils parallèles 9, on a supposé que des fils 8 des deux réseaux de fils obliques étaient visibles dans le plan de la section. Les figures 18, 19 et 20 illustrent l'aspect de surface des tressages correspondant respectivement aux mailles des figures 15, 16 et 17.

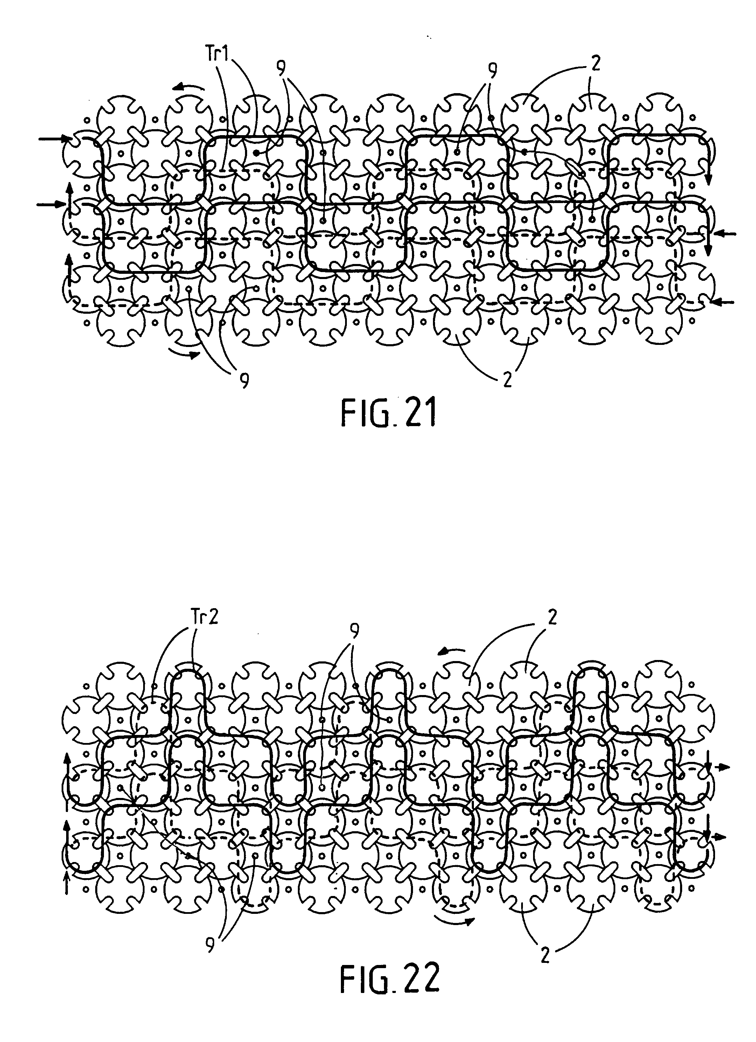

Par ailleurs, les figures 21 et 22 illustrent, en superposition sur un schéma en plan de l'agencement en quinconces des roues à ouches 2 et des fils parallèles 9, deux possibilités de trajets Tr1 et Tr2 pour les fuseaux 6 porteurs des fils 8, afin d'obtenir la maille de tressage illustrée sur les figures 15 et 18. On vérifie aisément que chacun des trajets Tr1 et Tr2 n'est composé que de successions des premiers, deuxièmes et troisièmes trajets élémentaires t1, t2 et r, tels qu'illustrés sur les figures 7B, 9B et 11B.

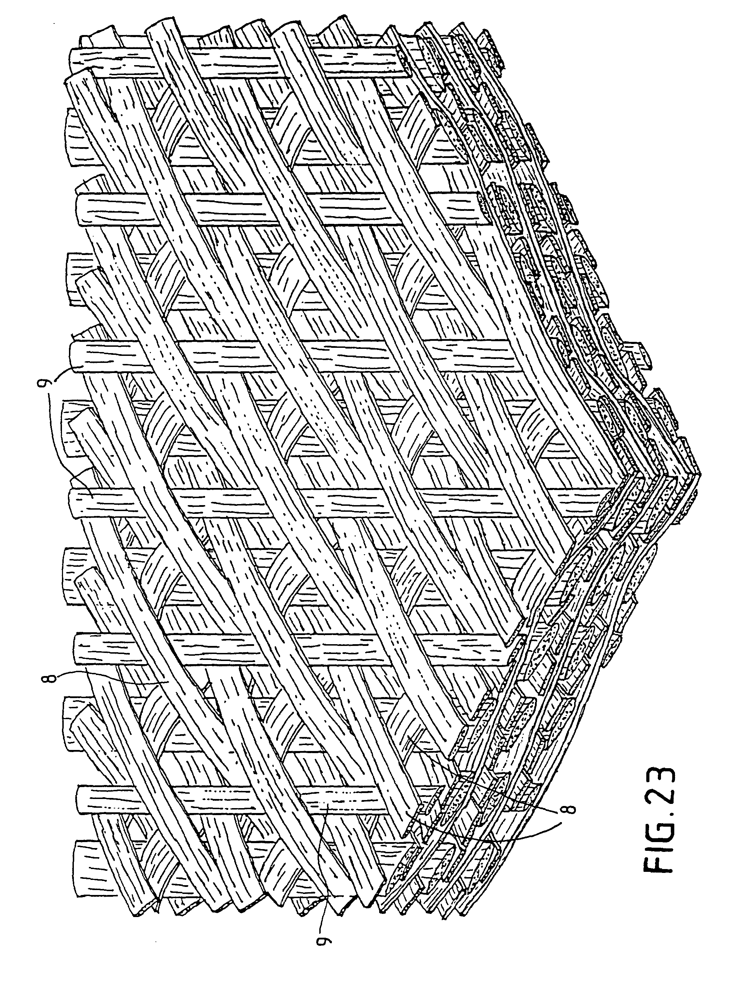

La figure 23 illustre schématiquement en perspective, avec coupe, une tresse 11 ou une armature 34 correspondant à un autre exemple de tressage avec la maille des figures 15 et 18. Ce tressage comporte sept niveaux superposés de fils 9 et, si la direction des fils 9 est prise égale à 0°, il comprend de plus trois nappes de fils 8 à +α° et trois nappes de fils 8 à -α°. L'angle α est par exemple égal à 60°.

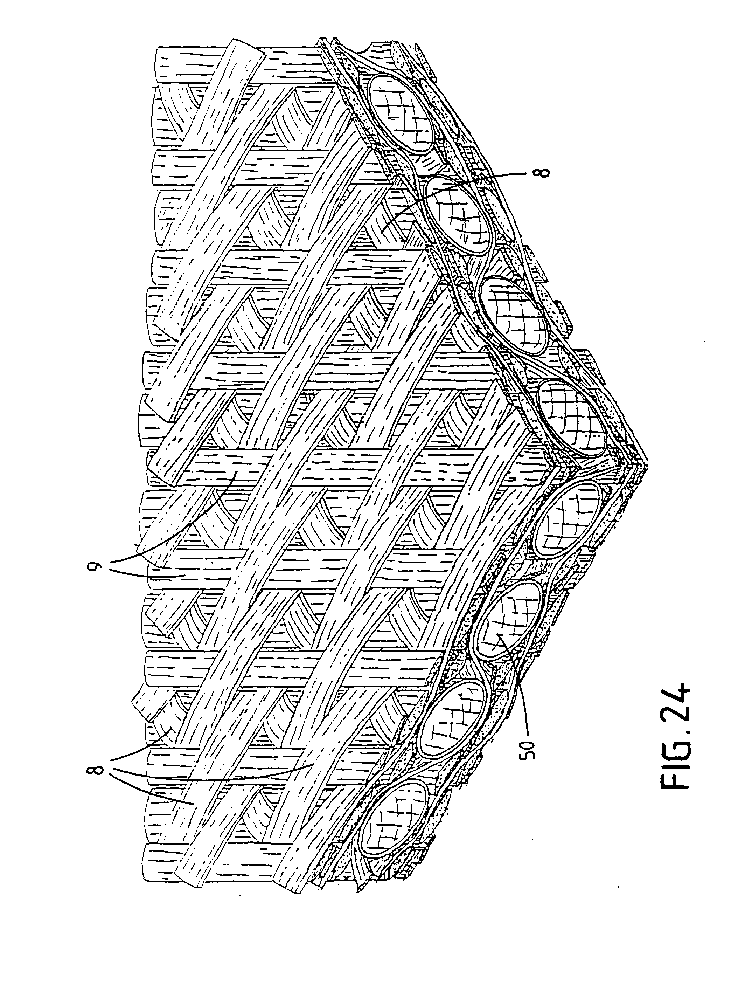

Dans la variante de réalisation du tressage de la figure 23, illustrée par la figure 24, certains fils parallèles 9 ont été remplacés par des tubes 50, parallèles entre eux et auxdits fils 9. On obtient ainsi une structure comparable à une structure en nid d'abeilles.

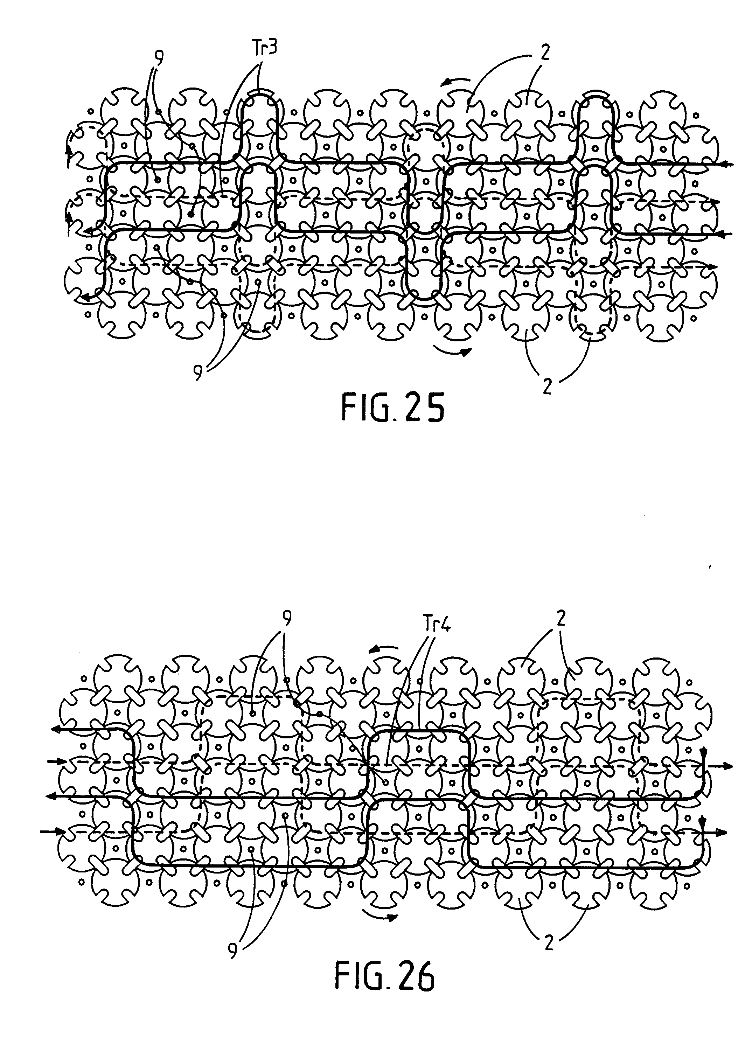

Les figures 25 et 26 illustrent, en vue comparable aux figures 21 et 22, deux possibilités de trajets Tr3 et Tr4 pour les fuseaux 6 porteurs des fils 8, afin d'obtenir la maille de tressage des figures 16 et 19.

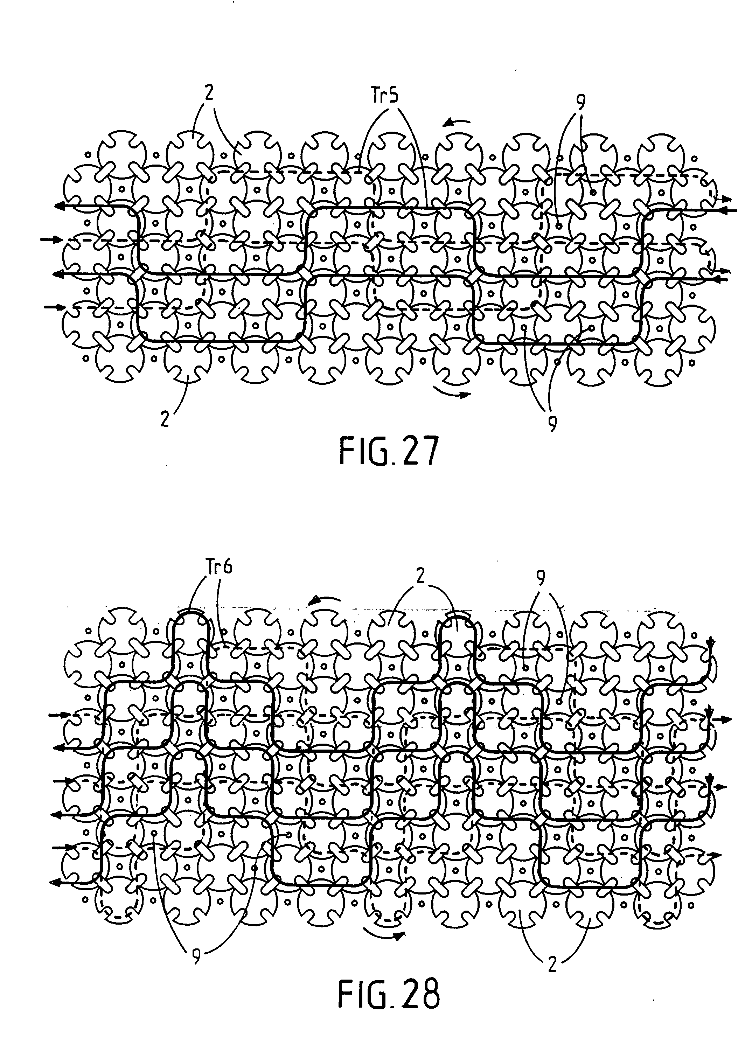

La figure 27 illustre, en vue comparable aux figures 21, 22, 24 et 25, des trajets Tr5 pour les fuseaux 6, afin d'obtenir la maille de tressage des figures 17 et 20.

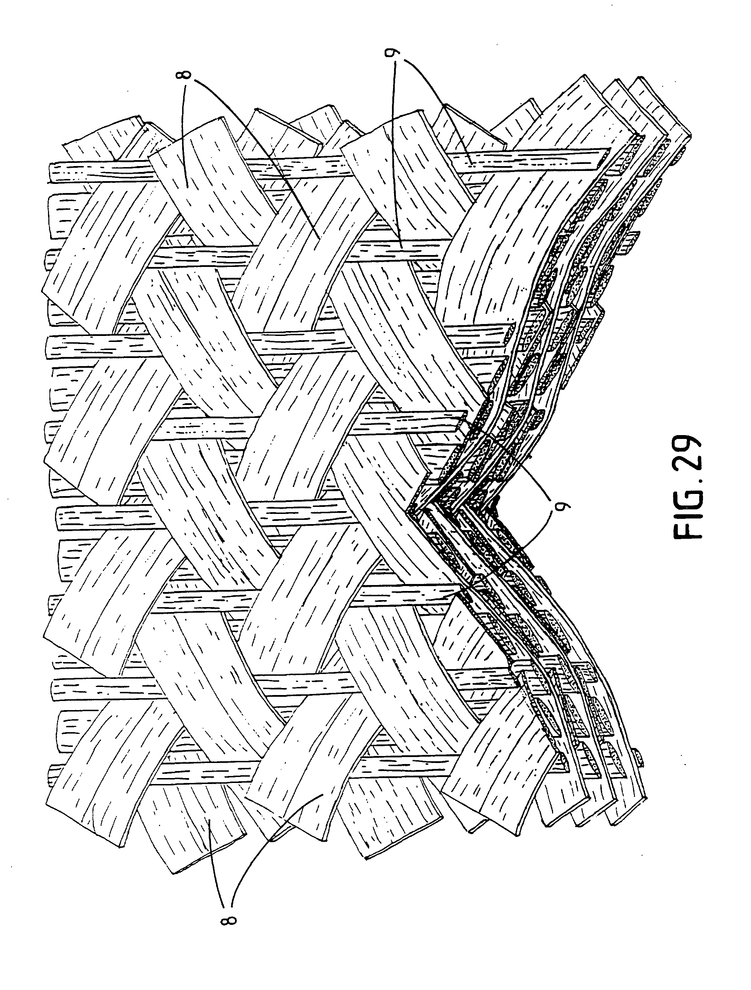

Enfin, la figure 28 illustre, en vue comparable aux figures 21, 22, 24, 25 et 27, des trajets Tr6 pour les fuseaux 6, afin d'obtenir la variante de tressage à sept niveaux illustrée en perspective schématique sur la figure 29.

De ce qui précède, on comprendra aisément que, étant donné le grand nombre de combinaisons possibles des premier, deuxième et troisième trajets élémentaires t1, t2 et r, les exemples de mailles de tressage, de structures tressées et de trajets de fuseaux montrés par les figures 15 à 27 ne sont que des possibilités parmi d'autres et que ces exemples ne sont pas limitatifs des possibilités de la présente invention.

## Revendications

1. Structure tubulaire tressée (11) comportant des éléments allongés longitudinaux (9) répartis sur une pluralité de couronnes coaxiales à la structure et des fils de tressage (8) formant deux réseaux de directions obliques par rapport auxdits éléments allongés longitudinaux et entrelacés avec lesdits éléments allongés longitudinaux, lesdits fils de tressage suivant des trajets qui les font passer entre lesdits éléments allongés longitudinaux,
**caractérisée en ce que** lesdits fils de tressage (8) de chacun desdits réseaux forment un ensemble de couches superposées dans lesquelles lesdits fils de tressage (8) sont parallèles d'une couche à l'autre.

2. Structure tubulaire selon la revendication 1,
**caractérisée en ce que** lesdits éléments allongés longitudinaux (9) sont choisis parmi les éléments d'un groupe comprenant des fils, des mèches de fils, des câbles, des baguettes et des tubes.

3. Procédé pour la réalisation par tressage d'une structure tubulaire (10), au moyen d'une pluralité de fils de tressage (8) se dévidant d'autant de bobines (7) déplaçables par une succession de trajets élémentaires pour que lesdits fils de tressage s'entrelacent avec des éléments allongés (9) parallèles les uns aux autres et répartis sur une pluralité de couronnes coaxiales,
**caractérisé en ce que** l'on déplace lesdites bobines (7) à l'aide de trois sortes de trajets élémentaires, à savoir des premiers trajets élémentaires (t1) de direction orthogonale par rapport auxdites couronnes coaxiales, des deuxièmes trajets élémentaires (t2) de direction circonférentielle par rapport à ces dernières et des troisièmes trajets élémentaires (r), dont chacun d'eux raccorde un premier et un deuxième trajets élémentaires entre eux.

4. Machine pour la réalisation d'une tresse (11) comportant un ensemble de roues à ouches identiques (2), montées sur un support fixe (1) et entraînées en rotation pour faire circuler des fuseaux (6) porteurs de bobines (7) de fils de tressage (8), lesdites roues à ouches étant disposées en lignes parallèles et équidistantes (L-L),
**caractérisée :**
- **en ce que**, dans ledit ensemble de roues à ouches :
. les roues à ouches (2) appartenant à une ligne sont espacées les unes des autres, de sorte que deux roues à ouches consécutives appartenant à une même ligne ne peuvent coopérer directement l'une avec l'autre ;
. une roue à ouches (2) appartenant à une ligne est disposée entre deux roues à ouches appartenant à une ligne voisine et coopère avec celles-ci ; et
- en ce que, dans les espaces entre les roues consécutives d'une ligne, sont prévus des passages (3) pour lesdits éléments allongés longitudinaux (9) de ladite structure tubulaire tressée.

5. Machine selon la revendication 4,
**caractérisée en ce que**, dans lesdits espaces entre les roues à ouches consécutives d'une ligne, sont de plus prévues des aiguilles rhomboïdales (17) à orientation commandée destinées soit à faire passer lesdits fuseaux (6) d'une roue à ouches à une autre appartenant à une ligne voisine, soit à maintenir lesdits fuseaux sur leurs roues à ouches respectives.

6. Machine selon les revendications 4 et 5,
**caractérisée en ce que** lesdites aiguilles (17) sont coaxiales auxdits passages (3) pour les éléments allongés (9).

7. Machine selon l'une des revendications 5 ou 6,
**caractérisée en ce que** lesdites aiguilles (17) sont commandées en orientation par une tringlerie (19, 20).

8. Machine selon l'une des revendications 5 à 7,
**caractérisée en ce que**, à chaque instant :
- toutes les aiguilles (17) associées à une ligne de roues à ouches (2) sont parallèles les unes aux autres et présentent donc une orientation commune ; et
- les orientations communes des aiguilles (17) associées à deux lignes voisines de roues à ouches (2) sont symétriques l'une de l'autre par rapport auxdites lignes.

9. Machine selon l'une quelconque des revendications 4 à 8, **caractérisée en ce que** ledit support fixe (1) des roues à ouches est plan.

10. Machine selon l'une quelconque des revendications 4 à 8, **caractérisée en ce que** ledit support fixe (31, 41) des roues à ouches (2) est cylindrique.

11. Machine selon la revendication 10,
**caractérisée en ce que** l'axe (H-H) dudit support cylindrique fixe (31) est horizontal.

12. Machine selon la revendication 10,
**caractérisée en ce que** l'axe (V-V) dudit support cylindrique fixe (41) est vertical.

13. Machine selon l'une quelconque des revendications 4 à 12,
**caractérisée en ce qu'**elle comporte des moyens de coupe (33) pour fendre longitudinalement ladite tresse (11).

14. Armature plane (34) pour matériau composite comportant des éléments allongés parallèles (9) répartis sur plusieurs niveaux superposés, à la manière de fils de trame,
**caractérisée :**
- **en ce qu'**elle comporte :
. un premier réseau de fils (8) parallèles entre eux passant autour desdits éléments allongés (9) se trouvant à des niveaux différents ;
. un second réseau de fils (8) parallèles entre eux passant autour desdits éléments allongés (9) se trouvant à des niveaux différents ; et
- en ce que les directions générales des fils (8) desdits premier et second réseaux sont symétriques l'une de l'autre par rapport auxdits éléments allongés parallèles (9).

15. Procédé pour l'obtention de l'armature plane (34) spécifiée sous la revendication 14,
**caractérisé en ce que** :
- on commence par réaliser une structure tubulaire tressée (11) comportant des éléments allongés longitudinaux (9) répartis sur une pluralité de couronnes coaxiales à la structure et des fils de tressage (8) formant deux réseaux de directions obliques et symétriques par rapport aux éléments allongés longitudinaux (9) et entrelacés avec lesdits éléments allongés longitudinaux (9), lesdits fils de tressage (8) suivant des trajets qui les font passer entre lesdits éléments allongés longitudinaux (9), de sorte que lesdits fils de tressage (8) de chacun desdits réseaux forment un ensemble de couches superposées dans lesquelles lesdits fils de tressage (8) sont parallèles d'une couche à l'autre ; puis
- on fend ladite structure tubulaire (11) le long d'une ligne de coupe longitudinale parallèle auxdits éléments allongés longitudinaux (9).

## Claims

1. A braided tubular structure (11) including longitudinal elongate elements (9) distributed on a plurality of collars coaxial with the structure and braiding threads (8) forming two grids of directions oblique in relation to said longitudinal elongate elements and interlaced with said longitudinal elongate elements, said braiding threads following paths which cause them to pass between said longitudinal elongate elements,
**characterized in that** said braiding threads (8) of each one of said grids form an assembly of superposed layers in which said braiding threads (8) are parallel from one layer to the next.

2. The tubular structure as claimed in claim 1, **characterized in that** said longitudinal elongate elements (9) are selected from among the elements of a group comprising threads, thread rovings, cables, rods and tubes.

3. A process for the construction, by braiding, of a tubular structure (10), by means of a plurality of braiding threads (8) which are wound off from so many spools (7) which are displaceable through a succession of elementary paths that said braiding threads should become interlaced with elongate elements (9) which are parallel to one another and distributed on a plurality of coaxial collars,
**characterized in that** said spools (7) are displaced with the aid of three types of elementary paths, namely first elementary paths (t1) of direction orthogonal in relation to said coaxial collars, second elementary paths (t2) of direction circumferential in relation to the latter and third elementary paths (r), each one of which associates a first and a second elementary path inter se.

4. A machine for the construction of a braid (11) including a set of identical multiindented wheels (2), which are mounted on a fixed support (1) and driven in rotation to cause the circulation of spindles (6) carrying spools (7) of braiding threads (8), said multiindented wheels being disposed in parallel and equidistant lines (L-L),
**characterized:**
- **in that**, in said set of multiindented wheels:
• the multiindented wheels (2) belonging to a line are spaced from one another, so that two consecutive multiindented wheels belonging to one and the same line cannot cooperate directly with one another;
• a multiindented wheel (2) belonging to one line is disposed between two multiindented wheels belonging to an adjacent line and cooperates with said two multiindented wheels; and
- in that, in the spaces between the consecutive multiindented wheels of a line, there are provided passages (3) for said longitudinal elongate elements (9) of said braided tubular structure.

5. The machine as claimed in claim 4,
**characterized in that** within said spaces between the consecutive multiindented wheels of a line there are further provided rhomboidal needles (17) of controlled orientation which are intended either to cause said spindles (6) to pass from one multiindented wheel to another belonging to an adjacent line, or to maintain said spindles on their respective multiindented wheels.

6. The machine as claimed in claims 4 and 5,
**characterized in that** said needles (17) are coaxial with said passages (3) for the elongate elements (9).

7. The machine as claimed in claims 5 or 6,
**characterized in that** said needles (17) are controlled in orientation by a linkage gear (19, 20).

8. A machine as claimed in one of claims 5 to 7,
**characterized in that**, at each instant:
- all the needles (17) associated with a line of multiindented wheels (2) are parallel to one another and thus have a common orientation; and
- the common orientations of the needles (17) associated with two adjacent lines of multiindented wheels (2) are symmetrical with respect to one another in relation to said lines.

9. The machine as claimed in any one of claims 4 to 8,
**characterized in that** said fixed support (1) of the multiindented wheels is plane.

10. The machine as claimed in any one of claims 4 to 8,
**characterized in that** said fixed support (31, 41) of the multiindented wheels (2) is cylindrical.

11. The machine as claimed in claim 10,
**characterized in that** the axis (H-H) of said fixed cylindrical support (31) is horizontal.

12. The machine as claimed in claim 10,
**characterized in that** the axis (V-V) of said fixed cylindrical support (41) is vertical.

13. The machine as claimed in any one of claims 4 to 12,
**characterized in that** it includes cutting means (33) for longitudinally splitting said braid (11).

14. A plane armoring (34) for composite material including parallel elongate elements (9) distributed on a plurality of superposed levels, in the manner of weft threads, **characterized:**
- **in that** it includes:
• a first grid of threads (8) which are parallel to one another, passing around said elongate elements (9) situated at different levels;
• a second grid of threads (8) which are parallel to one another, passing around said elongate elements (9) situated at different levels; and
- in that the general directions of the threads (8) of said first and second grids are symmetrical with respect to one another in relation to said parallel elongate elements (9).

15. A process for obtaining the plane armoring (34) specified under claim 14,
**characterized in that**:
- initially there is constructed a braided tubular structure (11) including longitudinal elongate elements (9) distributed on a plurality of collars coaxial with the structure and braiding threads (8) which form two grids of directions oblique and symmetrical in relation to the longitudinal elongate elements (9) and interlaced with said longitudinal elongate elements (9), said braiding threads (8) following paths which cause them to pass between said longitudinal elongate elements (9), so that said braiding threads (8) of each one of said grids form an assembly of superposed layers in which said braiding threads (8) are parallel from one layer to the next; then
- said tubular structure (11) is split along a longitudinal cutting line parallel to said longitudinal elongate elements (9).

## Patentansprüche

1. Schlauchförmige Flechtstruktur (11), die gestreckte Längselemente (9), die auf mehrere, koaxial zur Struktur liegende Kronen verteilt sind, und Flechtfäden (8) umfasst, die zwei schräg zu den genannten gestreckten Längselementen liegende Netze bilden, die mit den genannten gestreckten Längselementen verflochten sind, wobei die genannten Flechtfäden Verläufe besitzen, durch die sie zwischen den genannten gestreckten Längselementen hindurchführen,
**dadurch gekennzeichnet, dass** die genannten Flechtfäden (8) eines jeden der genannten Netze eine Einheit von übereinander liegenden Schichten bilden, in denen die genannten Flechtfäden (8) von einer Schicht zur anderen parallel sind.

2. Schlauchförmige Struktur nach Anspruch 1,
**dadurch gekennzeichnet, dass** die genannten gestreckten Längselemente (9) aus den Elementen einer Gruppe ausgewählt werden, die Fäden, Fadenstränge, Seile, Stäbchen und Schläuche umfasst.

3. Verfahren zur Herstellung einer schlauchförmigen Struktur (10) durch Flechten mittels mehrerer Flechtfäden (8), die von so vielen Spulen (7), die in einer Folge von elementaren Verläufen verschiebbar sind, abgewickelt werden, dass sich die genannten Flechtfäden mit gestreckten Elementen (9) verflechten können, die zueinander parallel und auf mehrere koaxiale Kronen verteilt sind,
**dadurch gekennzeichnet, dass** man die genannten Spulen (7) mit Hilfe von drei Arten elementarer Verläufe verschiebt, nämlich erste elementare Verläufe (t1) rechtwinklig zu den genannten koaxialen Kronen, zweite elementare Verläufe (t2) mit Umfangsrichtung zu letztgenannten Kronen und dritte elementare Verläufe (r), von denen jeder einen ersten und einen zweiten elementaren Verlauf miteinander verbindet.

4. Maschine zur Herstellung einer Flechtstruktur (11), die eine Einheit von identischen Rädern mit Ausklinkungen (2) umfasst, die auf eine feste Halterung (1) montiert sind und in Drehung versetzt werden, um die Spindeln (6), auf denen die Spulen (7) der Flechtfäden (8) sitzen, rotieren zu lassen, wobei die genannten Räder mit Ausklinkungen in parallelen Linien mit gleichem Abstand (L-L) angeordnet sind,
**dadurch gekennzeichnet,**
- **dass** in der genannten Einheit von Rädern mit Ausklinkungen:
• die zu einer Linie gehörenden Räder mit Ausklinkungen (2) in einem solchen Abstand zueinander angeordnet sind, dass zwei aufeinanderfolgende, zu ein und derselben Linie gehörende Räder mit Ausklinkungen nicht direkt miteinander zusammenwirken können:
• ein zu einer Linie gehörendes Rad mit Ausklinkungen (2) zwischen zwei Rädern mit Ausklinkungen angeordnet ist, die zu einer benachbarten Linie gehören, und mit ihnen zusammenwirkt; und
- dass in den Räumen zwischen den aufeinanderfolgenden Rädern einer Linie Durchgänge (3) für die genannten gestreckten Längselemente (9) der genannten schlauchförmigen Flechtstruktur vorgesehen sind.

5. Maschine nach Anspruch 4,
**dadurch gekennzeichnet, dass** in den genannten Räumen zwischen den aufeinanderfolgenden Rädern mit Ausklinkungen einer Linie weiterhin rhombenförmige Nadeln (17) mit gesteuerter Ausrichtung vorgesehen sind, die entweder die genannten Spindeln (6) von einem Rad mit Ausklinkungen auf ein anderes, zu einer benachbarten Linie gehörendes Rad verschieben oder die genannten Spindeln auf ihren jeweiligen Rädern mit Ausklinkungen halten sollen.

6. Maschine nach den Ansprüchen 4 und 5,
**dadurch gekennzeichnet, dass** die genannten Nadeln (17) koaxial zu den Durchgängen (3) für die gestreckten Elemente (9) liegen.

7. Maschine nach einem der Ansprüche 5 oder 6,
**dadurch gekennzeichnet, dass** die genannten Nadeln (17) von einem Gestänge (19, 20) richtungsgesteuert werden.

8. Maschine nach einem der Ansprüche 5 bis 7,
**dadurch gekennzeichnet, dass** zu jedem Zeitpunkt
- alle einer Linie von Rädern mit Ausklinkungen (2) zugeordneten Nadeln (17) zueinander parallel sind und somit eine gemeinsame Ausrichtung besitzen; und
- die gemeinsamen Ausrichtungen der zwei benachbarten Linien von Rädern mit Ausklinkungen (2) zugeordneten Nadeln (17) in Bezug auf die genannten Linien zueinander parallel sind.

9. Maschine nach einem beliebigen der Ansprüche 4 bis 8,
**dadurch gekennzeichnet, dass** die genannte feste Halterung (1) der Räder mit Ausklinkungen flach ist.

10. Maschine nach einem der Ansprüche 4 bis 8,
**dadurch gekennzeichnet, dass** die genannte feste Halterung (31, 41) der Räder mit Ausklinkungen (2) zylindrisch ist.

11. Maschine nach Anspruch 10,
**dadurch gekennzeichnet, dass** die Achse (H-H) der genannten festen zylindrischen Halterung (31) waagerecht ist.

12. Maschine nach Anspruch 10,
**dadurch gekennzeichnet, dass** die Achse (V-V) der genannten festen zylindrischen Halterung (41) senkrecht ist.

13. Maschine nach einem beliebigen der Ansprüche 4 bis 12,
**dadurch gekennzeichnet, dass** sie Schneidmittel (33) zur Längsaufspaltung der genannten Flechtstruktur (11) umfasst.

14. Flache Bewehrung (34) für Verbundwerkstoff, die parallele gestreckte Elemente (9) umfasst, die auf mehreren übereinander liegenden Ebenen wie Schussfäden verteilt sind, **dadurch gekennzeichnet,**
- **dass** sie folgendes umfasst:
• ein erstes Netz von Fäden (8), die zueinander parallel sind und um die genannten gestreckten Elemente (9) verlaufen, die sich auf verschiedenen Ebenen befinden;
• ein zweites Netz von Fäden (8), die zueinander parallel sind und um die genannten gestreckten Elemente (9) verlaufen, die sich auf verschiedenen Ebenen befinden; und
- dass die allgemeinen Richtungen der Fäden (8) des genannten ersten und des genannten zweiten Netzes in Bezug auf die genannten parallelen gestreckten Elemente (9) symmetrisch zueinander sind.

15. Verfahren zur Herstellung der im Anspruch 14 angeführten flachen Bewehrung (34), **dadurch gekennzeichnet, dass**
- begonnen wird, eine schlauchförmige Flechtstruktur (11) herzustellen, die gestreckte Längselemente (9), die auf mehrere koaxial zur Struktur liegende Kronen verteilt sind, und Flechtfäden (8) umfasst, die zwei Netze mit schräger Richtung und symmetrischer Anordnung zu den gestreckten Längselementen (9) bilden, die mit den genannten gestreckten Längselementen (9) verflochten sind, wobei die genannten Flechtfäden (8) Verläufe besitzen, durch die sie zwischen den genannten gestreckten Längselementen (9) hindurchführen, so dass die genannten Flechtfäden (8) eines jeden der genannten Netze eine Einheit von übereinander liegenden Schichten bilden, in denen die genannten Flechtfäden (8) von einer Schicht zur anderen parallel sind; dann
- die genannte schlauchförmige Struktur (11) entlang einer Längsschnittlinie, die parallel zu den genannten gestreckten Längselementen (9) verläuft, aufgespalten wird.
